# EUROPÄISCHE PATENTANMELDUNG

(11) **EP 4 167 408 A1**
(43) Veröffentlichungstag der Anmeldung: **19.04.2023**
(21) Anmeldenummer: 21203223.9
(22) Anmeldetag: 18.10.2021
(51) Int. Cl.: H02G 3/00, H02G 3/38, E04B 1/00, E04C 2/52

(54) **MODULHAUS-KONZEPT**

(71) Anmelder: Ueckert, Jens, 91747 Westheim (DE)
(72) Erfinder: Ueckert, Jens, 91747 Westheim (DE)
(74) Vertreter: Stippl Patentanwälte

(57) **Zusammenfassung**

Gebäudemodul (1) für ein Modulhaus (100) umfassend mindestens ein Deckenelement (2), mindestens ein Bodenelement (4), mindestens ein Wandelement (3), wobei im Deckenelement (2) und/oder im Bodenelement (4) und/oder im Wandelement (3) mindestens eine, vorzugsweise vordefinierte, Bauelement-Montageposition (8, 8a, 8b) zur Installation von Bauelementen (24) vorgesehen ist, einen Hauptverteilerkasten (20), sowie mindestens einen vorkonfektionierten Kabelbaum (10, 10', 10"), welcher mindestens zwei, vorzugsweise mehrere auf bestimmte Längen zugeschnittene Kabel (26, 27, 28, 30, 31) umfasst, wobei die Kabel (26, 27, 28, 30, 31) vom Hauptverteilerkasten (20) zu den Bauelement-Montagepositionen (8) verlaufen, und wobei der mindestens eine vorkonfektionierte Kabelbaum (10, 10', 10") stromführende Kabel (26) umfasst, wobei die Kabel (26, 27, 28, 30, 31) des mindestens einen vorkonfektionierten Kabelbaums (10, 10', 10") zumindest teilweise gebündelt und zumindest teilweise parallel zueinander verlaufend angeordnet sind.

## Beschreibung

Die Erfindung betrifft ein Gebäudemodul gemäß dem Oberbegriff des Anspruchs 1 sowie ein Modulhaus gemäß dem Oberbegriff des Anspruchs 20.

### Technologischer Hintergrund

Modulhäuser sind aus Gebäudemodulen aufgebaut, welche in einer Werkshalle vorgefertigt werden und einen hohen Fertigungsgrad aufweisen. Dies bedeutet, dass elektrische Installationen der einzelnen Gebäudemodule bereits werksseitig durchgeführt werden. Die elektrischen Installationen müssen hierbei von einer Elektrofachkraft durchgeführt werden, welche Kabel manuell von einem Verteilerkasten ausgehend zu den geplanten Bauelementen, z. B. Steckdosen und/oder Lichtschaltern, verlegt. Diese Installationsarbeiten sind besonders zeitaufwendig und kostenintensiv. Nach den Installationsarbeiten werden die Gebäudemodule verputzt bzw. verplankt und zu einem Grundstück transportiert.

Vor Ort werden die einzelnen Gebäudemodule zu einem Modulhaus zusammengesetzt. Hierfür müssen zuerst die elektrischen Installationen der einzelnen Gebäudemodule miteinander verbunden werden. Diese zeitaufwendige und kostenintensive Tätigkeit muss erneut von einer Elektrofachkraft durchgeführt werden. Erst im Anschluss daran können die einzelnen Gebäudemodule mechanisch miteinander verbunden werden.

### Druckschriftlicher Stand der Technik

Die DE 1 873 196 U offenbart einen vorgefertigten Kabelbaum für die elektrische Installation von mit annährend gleichen Abmessungen zu erstellenden Bauwerken, z. B. Fertighäusern oder Raumeinheiten. Der Kabelbaum umfasst eine von einer Hauptsicherungstafel ausgehend verlegbare Verteilerleitung mit verschiedenen Abzweigungen, welche z. B. Steckdosen und Schalter elektrisch verbinden. Hierbei ist für einen wiederholt vorkommenden Abschnitt des Installationssystems, z. B. ein Systemabschnitt für die Verlegung in einem Zimmer, eine vorgefertigte, für sich hergestellte Einheit vorgesehen. Die Einheit umfasst die erforderlichen Schaltereinsätze, Steckdoseneinsätze und die sie verbindenden Leitungen.

Die JP 2000032635 A beschreibt ein Verbindungskabel, um verschiedene Raummodule im Fertighausbau elektrisch miteinander zu verbinden. Hierbei weist jedes Raummodul eine werkseitig vorinstallierte elektrische Installation auf, deren Kabel sich von Verbindungsdosen ausgehend zu elektrischen Bauteilen verzweigen. Mittels der Verbindungsdosen lassen sich die einzelnen Raummodule elektrisch miteinander verbinden.

### Aufgabe der vorliegenden Erfindung

Aufgabe der vorliegenden Erfindung ist es, ein Gebäudemodul zur Verfügung zu stellen, welches eine einfach durchführbare und kostenreduzierende Elektroinstallation ermöglicht.

### Lösung der Aufgabe

Die vorstehende Aufgabe wird durch die Merkmale des Anspruchs 1 sowie des nebengeordneten Anspruchs 20 gelöst. Zweckmäßige Ausgestaltungen der Erfindung sind in den abhängigen Ansprüchen beansprucht.

Erfindungsgemäß sind mindestens zwei, vorzugsweise mehrere Kabel, insbesondere mindestens zweiadrige Kabel, mindestens eines vorkonfektionierten Kabelbaums des Gebäudemoduls zumindest teilweise gebündelt und zumindest teilweise parallel zueinander verlaufend angeordnet. Der mindestens eine Kabelbaum wird außerhalb des Gebäudemoduls vorkonfektioniert. Hierfür werden die für den Kabelbaum vorgesehenen Kabel außerhalb des Gebäudemoduls auf eine bestimmte Länge zugeschnitten und zumindest teilweise gebündelt. Zur Durchführung der Elektroinstallation muss der vorkonfektionierte Kabelbaum am Gebäudemodul angebracht werden und die Kabel von einem, z. B. an einen Hausanschluss angeschlossenen, Hauptverteilerkasten zu Bauelement-Montagepositionen bzw. Öffnungen in mindestens einem Wandelement und/oder in mindestens einem Bodenelement und/oder in mindestens einem Deckenelement geführt werden. Da alle Kabel im Kabelbaum gebündelt sind, werden diese in einem einzigen Arbeitsschritt verlegt. Somit entfällt ein zeitaufwendiges Verlegen von einzelnen Kabeln. Zudem wird das Verlegen der Kabel deutlich vereinfacht, sodass diese auch von einer nicht elektrisch geschulten Person verlegt werden können. Somit kann auf eine Elektrofachkraft verzichtet werden, wodurch effektiv Kosten eingespart werden können. Zudem sind die Kabel des vorkonfektionierten Kabelbaums jeweils auf die entsprechenden Längen zugeschnitten sind, welche benötigt werden, um die für die jeweiligen Kabel vorgesehenen Bauelement-Montagepositionen mit dem Hauptverteilerkasten zu verbinden. Es müssen somit keine zeitaufwendigen Nachbearbeitungen, z. B. ein Kürzen der Kabel, nach dem Verlegen des Kabelbaums durchgeführt werden.

Indem der mindestens eine vorkonfektionierte Kabelbaum zusätzlich mindestens ein Starkstromkabel bzw. Drehstromkabel und/oder mindestens ein Netzwerkkabel und/oder mindestens ein steuerndes Kabel und/oder mindestens ein Datenübertragungskabel umfassen kann, sind alle für das Gebäudemodul vorgesehenen Kabel in dem Kabelbaum gebündelt, wodurch diese in einem Arbeitsschritt verlegt werden können. Es sind somit keine zusätzlichen Verlegungsarbeiten notwendig. Demnach stehen verschiedene Kabeltypen zur Verfügung, wodurch der Kabelbaum an verschiedenste Ansprüche angepasst werden kann.

Dadurch, dass das Datenübertragungskabel ein Bus-Kabel ist, können Steuerungsdaten in einfacher Weise zwischen den Bauelementen ausgetauscht werden. Hierdurch wird es möglich, die Positionen von Schaltern und/oder von an Bauelemente angeschlossenen Türen und/oder von an Bauelemente angeschlossenen Fenstern und/oder von an Bauelemente angeschlossenen Rollläden zu überwachen und/oder diese anzusteuern. Vorzugsweise kann zudem eine, z. B. im Hauptverteilerkasten angeordnete, Zentrale vorgesehen sein, um die Datenübertragung zwischen den Bauelementen zentral zu steuern.

Vorteilhafterweise sind die Kabel mit dem Hauptverteilerkasten und/oder mit den Bauelementen über Steckverbinder verbindbar. Hierdurch wird das Verbinden der Kabel mit den Bauelementen besonders vereinfacht und ein fehlerfreies Anschließen der Kabel gewährleistet. Hierdurch kann Arbeitszeit in effektiver Weise eingespart werden. Zudem wird es durch die Steckverbindung möglich, dass diese Verbindungsarbeiten nicht von einer Elektrofachkraft durchgeführt werden müssen. Hierdurch werden zusätzliche Kosten eingespart.

Vorzugsweise ist als Bauelement eine Steckdose oder ein Schalter oder eine Verteilerdose oder eine Klemme oder eine Anschlussdose vorgesehen.

Zweckmäßigerweise verläuft mindestens ein Kabel zu mehreren Bauelement-Montagepositionen. Hierbei wird das Kabel bei jeder Bauelement-Montageposition mit einem Bauelement verbunden, wobei die Kabel in den Bauelementen durchgeschleift bzw. durchgeleitet werden können. Infolgedessen kann die benötigte Anzahl von Kabeln deutlich reduziert werden.

Zweckmäßigerweise ist mindestens ein Kabelbaumverbinder vorgesehen, mittels dem der mindestens eine Kabelbaum des Gebäudemoduls mit einem Kabelbaum eines weiteren Gebäudemoduls verbindbar ist. Vorteilhafterweise kann für jeden Kabeltyp ein eigener Kabelbaumverbinder vorgesehen sein. Der Kabelbaumverbinder eignet sich insbesondere dazu, Kabelbäume verschiedener Gebäudemodule miteinander zu verbinden. Infolgedessen ist es ausreichend, dass nur ein Gebäudemodul mit dem Hausanschluss verbunden ist, da aufgrund des mindestens einen Kabelbaumverbinders alle weiteren, angeschlossenen Gebäudemodule mit dem Stromnetz verbunden werden.

Indem es sich bei dem Kabelbaumverbinder um einen Steckverbinder handelt, können die Kabelbäume verschiedener Gebäudemodule in besonders einfacher und fehlerfreier Weise miteinander verbunden werden. Das Verbinden der Steckverbinder muss nicht von einer Elektrofachkraft durchgeführt werden.

Zweckmäßigerweise sind mehrere vorkonfektionierte Kabelbäume vorgesehen. Infolgedessen wird die Handhabbarkeit bei der Verlegung der Kabelbäume deutlich erleichtert.

Vorteilhafterweise ist in mindestens einem Wandelement und/oder in mindestens einem Deckenelement und/oder in mindestens einem Bodenelement ein vorkonfektionierter Kabelbaum vorgesehen. Dies ist besonders vorteilhaft, wenn z. B. das Wandelement und/oder das Deckenelement und/oder das Bodenelement vorab fertig aufgebaut werden bzw. wird und nur noch am Gebäudemodul bzw. an anderen Wandelementen montiert werden bzw. wird. Der Kabelbaum des entsprechenden Elementes kann über einen weiteren Kabelbaum mit dem Hauptverteilerkasten verbunden werden. Zweckmäßigerweise verlaufen die Kabel des Kabelbaums in dem Wandelement und/oder in dem Deckenelement und/oder in dem Bodenelement z. B. ausgehend von einem Kabelbaumverbinder zu mindestens einer Bauelement-Montageposition.

Vorzugsweise kann mindestens ein Kabelbaumverbinder vorgesehen sein, mittels welchem die Kabelbäume miteinander verbindbar sind. Hierdurch können alle im Gebäudemodul verwendeten Kabelbäume in einfacher Weise miteinander verbunden werden.

Vorzugsweise handelt es sich beim dem Kabelbaumverbinder um einen Steckverbinder.

Dadurch, dass das Gebäudemodul oder zumindest ein Wandelement in Ständerbauweise errichtet sein kann, kann eine kurze Bauzeit und eine flexible Raumgestaltung des Gebäudemoduls gewährleistet werden.

Vorzugsweise umfasst das Wandelement mindestens einen, vorzugsweise mehrere vertikal verlaufende, vorzugsweise beabstandet zueinander angeordnete Ständer und/oder mindestens einen, vorzugsweise mehrere horizontal verlaufende, vorzugsweise beabstandet zueinander angeordnete Riegel. Hierdurch wird eine ausreichende Stabilität des Gebäudemoduls gewährleistet.

Vorteilhafterweise wird mindestens ein Wandelement, insbesondere mindestens ein äußeres Wandelement, welches die Außenwand des Gebäudemoduls bildet, liegend vorgefertigt.

Dadurch, dass mindestens ein Leerrohr zur Aufnahme von mindestens einem Kabel vorgesehen ist, welches in einem Wandelement und/oder in einem Deckenelement und/oder in einem Bodenelement angeordnet ist, kann das Wandelement und/oder das Deckenelement und/oder das Bodenelement in einfacher Weise mit Kabeln nachgerüstet werden, auch wenn das jeweilige Element bereits fertig aufgebaut und/oder in das Gebäudemodul integriert ist.

Zweckmäßigerweise weist das Wandelement eine Innenverschalung und/oder eine Außenverschalung auf, wobei es sich insbesondere um eine Gipskartonverschalung oder eine Grobspanplatten (OSB)-Verschalung oder eine Holzverschalung handelt. Hierdurch kann das in Ständerbauweise errichtete Wandelement in einfacher Weise verschalt bzw. verkleidet werden.

Zweckmäßigerweise umfasst das Gebäudemodul mehrere Räume. Hierbei können z. B. ein Badezimmer und/oder eine Küche und/oder ein Schlafzimmer vorgesehen sein, sodass das Gebäudemodul auch alleinstehend bewohnbar ist.

Vorzugsweise ist das Gebäudemodul werkseitig vorgefertigt transportierbar. Hierbei wird das Gebäudemodul in einer Fabrik fertig errichtet und zu einem Grundstück transportiert. Am Grundstück wird das Gebäudemodul nur noch an der vorgesehenen Position aufgestellt. Hierdurch ist das Gebäude direkt nach dem Aufbau bezugsfertig, ohne dass weitere Baumaßnahmen durchgeführt werden müssen.

Dadurch, dass das Gebäudemodul eine Gebäudemodul-autarke Stromversorgung, z. B. eine Batterie oder einen Akkumulator, und/oder eine Photovoltaikanlage umfasst, kann das Gebäudemodul mit Strom versorgt werden, bis es an den Hausanschluss angeschlossen ist. Zudem können hierdurch Stromausfälle überbrückt werden. Vorteilhafterweise wird der Akkumulator nach dem Anschluss des Gebäudemoduls an das Stromnetz selbsttätig aufgeladen.

Die vorliegende Erfindung betrifft auch, nebengeordnet beansprucht, ein Modulhaus aus mehreren Gebäudemodulen, wobei das Modulhaus mindestens ein Gebäudemodul nach einem der Ansprüche 1 - 19 umfasst.

### Beschreibung der Erfindung anhand von Ausführungsbeispielen

Zweckmäßige Ausgestaltungen des erfindungsgemäßen Gebäudemoduls werden nachstehend anhand von Zeichnungsfiguren näher erläutert. Wiederkehrende Merkmale werden der Übersichtlichkeit halber lediglich mit einem Bezugszeichen versehen. Es zeigen:
- Fig. 1: eine schematische, perspektivische Darstellung eines Beispiels eines erfindungsgemäßen Gebäudemoduls;
- Fig. 2: eine schematische Darstellung des Gebäudemoduls gemäß Fig. 1 in Seitenansicht;
- Fig. 3: eine schematische Darstellung des Gebäudemoduls gemäß Fig. 1 in Draufsicht;
- Fig. 4a: eine schematische, perspektivische Darstellung eines Innenraums des Gebäudemoduls gemäß Fig. 1;

- Fig. 4b: eine beispielhafte, schematische Darstellung von zwei Bauelement-Montagepositionen und einem darin verlegten Kabel eines in dem Gebäudemodul nach Fig. 1 verwendeten Kabelbaums;
- Fig. 4c: eine beispielhafte, schematische Darstellung von drei BauelementMontagepositionen und darin verlegter Kabel des in dem Gebäudemodul nach Fig. 1 verwendeten Kabelbaums;
- Fig. 4d: eine schematische, perspektivische Darstellung eines Innenraums des Gebäudemoduls gemäß Fig. 1;
- Fig. 4e: eine schematische Darstellung von Kabeln des in dem Gebäudemodul nach Fig. 1 verwendeten Kabelbaums;
- Fig. 5a: eine schematische Darstellung des in dem Gebäudemodul nach Fig. 1 verwendeten Kabelbaums gemäß einer ersten Ausgestaltung;
- Fig. 5b: eine schematische Darstellung des in dem Gebäudemodul nach Fig. 1 verwendeten Kabelbaums gemäß einer zweiten Ausgestaltung;
- Fig. 6a: eine beispielhafte, schematische Darstellung einer Steckverbindung zwischen einem Kabel und einem Bauelement in gelöster Position;
- Fig. 6b: eine beispielhafte, schematische Darstellung der Steckverbindung gemäß Fig. 6a in verbundener Position;
- Fig. 6c: eine beispielhafte, schematische Darstellung der Steckverbindung gemäß Fig. 6a im eingebauten Zustand des Bauelementes;
- Fig. 7a: eine beispielhafte, schematische Darstellung einer Steckverbindung zwischen einem Bauelement und zwei Kabeln in gelöster Position;

- Fig. 7b: eine beispielhafte, schematische Darstellung der Steckverbindung gemäß Fig. 7a im eingebauten Zustand des Bauelementes;
- Fig. 8: eine schematische, perspektivische Darstellung eines Innenraums des Gebäudemoduls gemäß Fig. 1 mit mehreren Kabelbäumen;
- Fig. 9: eine schematische, perspektivische Darstellung eines Beispiels eines erfindungsgemäßen Modulhauses;
- Fig. 10a: eine schematische Darstellung zweier benachbarter Gebäudemodule des Modulhauses gemäß Fig. 9 in Draufsicht gemäß einer ersten Ausgestaltung sowie
- Fig. 10b: eine schematische Darstellung zweier benachbarter Gebäudemodule des Modulhauses gemäß Fig. 9 in Draufsicht gemäß einer zweiten Ausgestaltung.

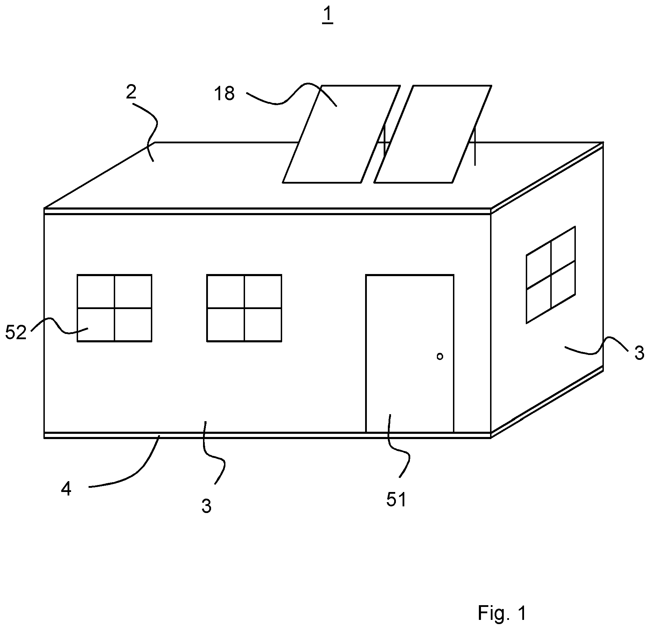

Bezugszeichen 1 in Fig.1 zeigt ein Beispiel eines erfindungsgemäßen Gebäudemoduls. Das Gebäudemodul 1 umfasst ein Deckenelement 2, ein Bodenelement 4 sowie mehrere Wandelemente 3, welche eine Tür 51 und Fenster 52 umfassen. Auf dem Deckenelement 2 ist zudem eine Photovoltaikanlage 18 angebracht, um das Gebäudemodul 1 mit Strom zu versorgen. Das Gebäudemodul 1 wird in einer Fabrik in Ständerbauweise bezugsfertig vorgefertigt, d. h. alle erforderlichen Elektroinstallationen sind bereits fertig installiert und das Gebäudemodul 1 ist vollständig aufgebaut und verputzt. Nach der werksseitigen Fertigstellung wird das Gebäudemodul 1 zu einem dafür vorgesehenen Grundstück, z. B. mit einem Tieflader, transportiert. Am Grundstück angekommen wird das Gebäudemodul 1 an die dafür vorgesehene Position gebracht. Der neue Eigentümer bzw. Mieter kann im Anschluss daran direkt in das Gebäudemodul 1 einziehen.

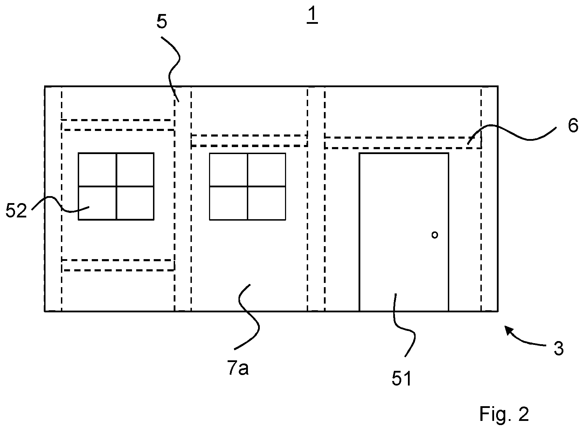

Das Wandelement 3, vgl. Fig. 2, umfasst mehrere beabstandet zueinander angeordnete Ständer 5. Zwischen den Ständern 5 sind mehrere beabstandet zueinander angeordnete Riegel 6 vorgesehen. Zwischen den Ständern 5 und den Riegeln 6 kann eine (in den Figuren nicht dargestellte) Isolierung vorgesehen sein. Das Wandelement 3 ist zudem mit einer Außenverschalung 7a verkleidet, welche aus Gipskarton oder Holz gefertigt sein kann. Die Außenverschalung 7a kann verputzt werden. Zweckmäßigerweise werden die äußeren Wandelemente 3, welche die Außenwände des Gebäudemoduls 1 bilden, vollständig aufgebaut, bevor sie am Gebäudemodul 1 montiert werden. Der vollständige Aufbau der äußeren Wandelemente 3 findet vorzugsweise liegend statt. Die inneren Wandelemente 3, welche die Innenwände des Gebäudemoduls 1 bilden, können einseitig beplankt aufgebaut werden, sodass Montagearbeiten im Inneren der Wandelemente 3 noch durchgeführt werden können.

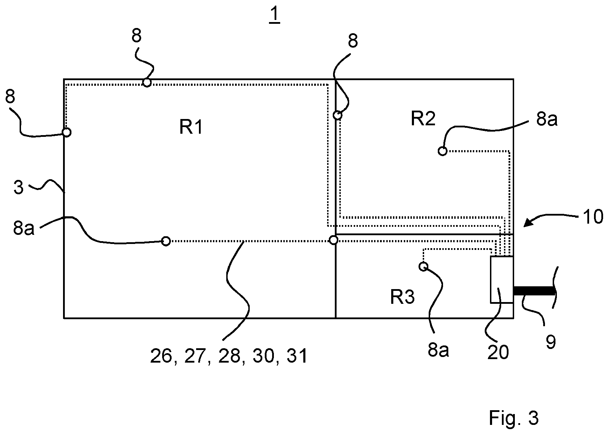

Fig. 3 zeigt das Gebäudemodul 1 in Draufsicht. Das Gebäudemodul 1 ist in drei Räume R1, R2 und R3 unterteilt. Im Raum R3 befindet sich ein Hauptverteilerkasten 20, welcher über einen Hausanschluss 9 mit einem Stromnetz verbunden ist.

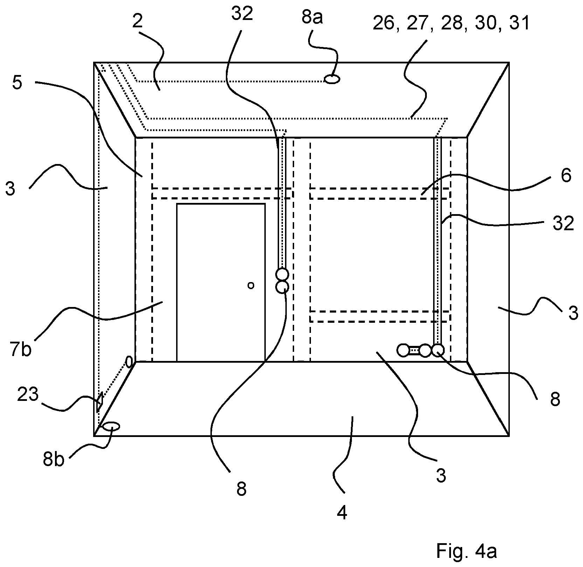

Das Gebäudemodul 1 umfasst zudem einen vorkonfektionierten Kabelbaum 10, welcher mehrere Kabel 26, 27, 28, 30, 31 umfasst. Wie die Figuren 3 und 4a zeigen verlaufen die Kabel 26, 27, 28, 30, 31 des vorkonfektionierten Kabelbaums 10 ausgehend von dem Hauptverteilerkasten 20 zu Bauelement-Montagepositionen 8 in den Wandelementen 3, zu Bauelement-Montagepositionen 8a in dem Deckenelement 2 oder zu Bauelement-Montagepositionen 8b in dem Bodenelement 4. Hierbei verlaufen die Kabel 26, 27, 28, 30, 31 hinter einer Innenverschalung 7b im Wandelement 3 zu den Bauelement-Montagepositionen 8, 8a, 8b, sodass die Kabel 26, 27, 28, 30, 31 nicht sichtbar sind. Ein Kabel 26, 27, 28, 30, 31 kann auch zu mehrere Bauelement-Montagepositionen 8, 8a, 8b verlaufen.

Zudem sind in einem Wandelement 3 Leerrohre 32 vorgesehen. Durch diese Leerrohre 32 können die Kabel 26, 27, 28, 30, 31 verlaufen. Die Leerrohre 32 dienen dazu, dass auch nach der Fertigstellung eines Wandelementes 3, z. B. eines äußeren Wandelementes 3, durch dieses Kabel 26, 27, 28, 30, 31 verlegt werden können, ohne dass die Innenverschalung 7b entfernt werden muss.

Der vorkonfektionierte Kabelbaum 10 wird außerhalb des Gebäudemoduls 1 gefertigt. Hierfür werden die Kabel 26, 27, 28, 30, 31 jeweils auf die entsprechenden Längen zugeschnitten, welche benötigt werden, um von den für die jeweiligen Kabel 26, 27, 28, 30, 31 vorgesehenen Bauelement-Montagepositionen 8, 8a, 8b zu dem Hauptverteilerkasten 20 zu verlaufen. Die Kabel 26, 27, 28, 30, 31 werden im Anschluss an das Zuschneiden zumindest teilweise gebündelt. Hierdurch entsteht ein zusammenhängender Kabelbaum 10, in welchem die für das Gebäudemodul 1 vorgesehenen Kabel 26, 27, 28, 30, 31 gebündelt sind. Bei einer Installation des Kabelbaums 10 am Gebäudemodul 1 muss dieser nur noch ausgelegt werden. Aufgrund der Bündelung der Kabel 26, 27, 28, 30, 31 im Kabelbaum 10 werden alle Kabel 26, 27, 28, 30, 31 auf einmal verlegt. Wie bereits beschrieben, sind die Kabel 26, 27, 28, 30, 31 auf die benötigte Länge zugeschnitten, sodass ein weiteres Zuschneiden der Kabel 26, 27, 28, 30, 31 entfällt. Die Kabel 26, 27, 28, 30, 31 verlaufen im Gebäudemodul 1 zumindest teilweise gebündelt und zumindest teilweise parallel zueinander, wie dies die Figuren 3 und 4a verdeutlichen.

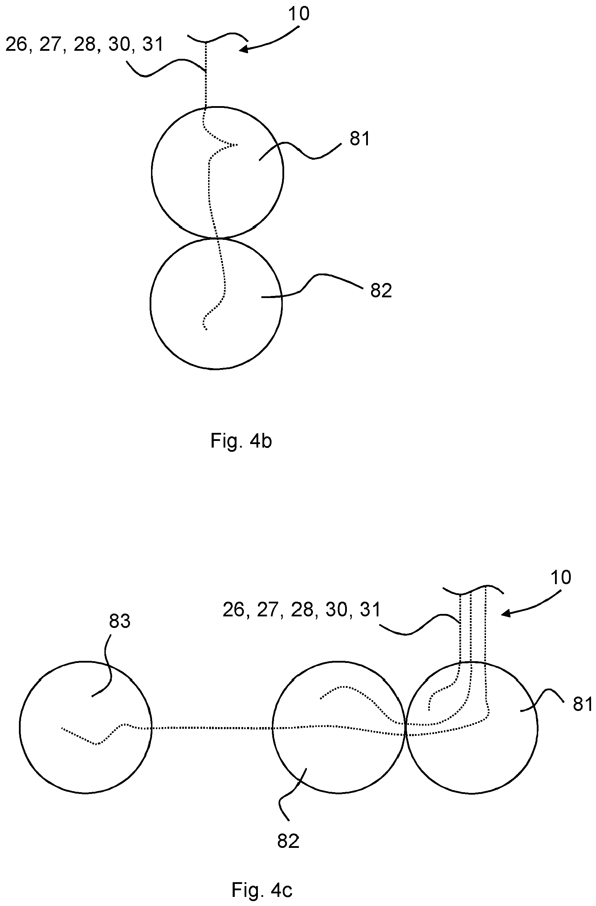

Wie in der Fig. 4b dargestellt ist, kann ein Kabel 26, 27, 28, 30, 31 des Kabelbaums 10 zu zwei Bauelement-Montagepositionen 81, 82 verlaufen. Hierbei ist das Kabel 26, 27, 28, 30, 31 zuerst zu einer ersten Bauelement-Montageposition 81 und von dort aus zu einer zweiten Bauelement-Montageposition 82 verlegt. Die zweite Bauelement-Montageposition 82 muss hierbei nicht, wie in Fig. 4c dargestellt ist, neben der ersten Bauelement-Montageposition 81 angeordnet sein. Vielmehr kann die zweite Bauelement-Montageposition 82 auch von der ersten Bauelement-Montageposition 81 entfernt angeordnet sein. In der ersten Bauelement-Montageposition 81 kann das Kabel 26, 27, 28, 30, 31 mit einem (nicht in der Fig. 4b dargestellten) Bauelement 24 verbunden werden. Hierbei wird es möglich, die Kabel 26, 27, 28, 30, 31 im Bauelement durchzuschleifen bzw. durchzuleiten.

Des Weiteren können auch mehrere Kabel 26, 27, 28, 30, 31 zu einer Anordnung von mehreren Bauelement-Montagepositionen 81, 82, 83 verlaufen, vgl. Fig. 4c. Hierbei verlaufen drei Kabel 26, 27, 28, 30, 31 des Kabelbaums 10 zu einer ersten Bauelement-Montageposition 81. Ein Kabel 26, 27, 28, 30, 31 verbleibt dort. Die beiden weiteren Kabel 26, 27, 28, 30, 31 verlaufen zu einer zweiten Bauelement-Montageposition 82. Dort verbleibt ebenfalls ein Kabel 26, 27, 28, 30, 31 und das letzte Kabel 26, 27, 28, 30, 31 verläuft zu einer entfernt zu den Bauelement-Montagepositionen 81, 82 angeordneten dritten Bauelement-Montageposition 83. Die Bauelement-Montagepositionen 81, 82, 83 können sowohl nebeneinander angeordnet oder zumindest teilweise voneinander beabstandet sein.

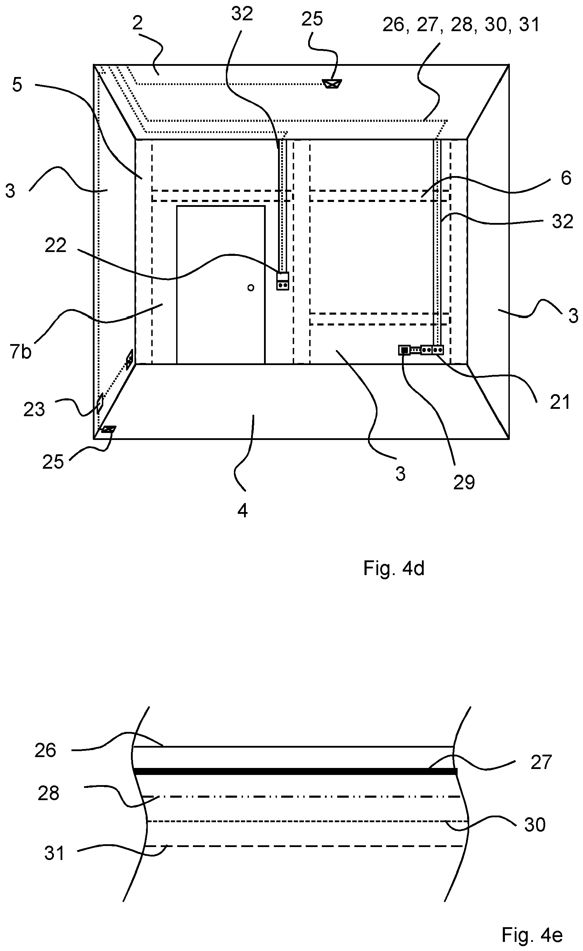

In den Bauelement-Montagepositionen 8, 8a, 8b sind Bauelemente 24 installiert, welche dort an die Kabel 26, 27, 28, 30, 31 angeschlossen sind, vgl. Fig. 4d. Als Bauelemente 24 sind Schalter 22, Steckdosen 21 und Abzweigdosen 23 vorgesehen. Zudem sind als Bauelemente 24 Klemmen 25 vorgesehen sein, an welche z. B. Lampen und/oder Fußbodenheizungen angeschlossen werden können.

Als Kabel 26, 27, 28, 30, 31 sind mindestens ein stromführendes Kabel 26, mindestens ein Starkstromkabel 27, mindestens ein Netzwerkkabel 30, mindestens ein steuerndes Kabel 31 und Datenübertragungskabel 28 vorgesehen, wie Fig. 4e zeigt. Mit dem Starkstromkabel 27 kann z. B. ein Herd und/oder eine Sauna mit Strom versorgt werden. Mit dem Datenübertragungskabel 28 bzw. den steuernden Kabeln 31 können z. B. Steuerungsdaten und/oder Informationsdaten zwischen Bauelementen 24 übertragen werden. Zudem können die Netzwerkkabel 30 über eine als Bauelement 24 vorgesehene Anschlussdose 29 an einen Computer oder ähnliches angeschlossen werden, woraufhin diese beispielsweise über einen Router auf das Internet zugreifen können.

Das Datenübertragungskabel 28 kann als Bus-Kabel zur Kommunikation der Bauelemente 24 untereinander ausgebildet sein. Hierdurch kann beispielsweise die Betätigung eines Schalters 22 die Stromzufuhr zu einer Klemme 25 zu- bzw. abschalten. Infolgedessen kann beispielsweise eine an die Klemme 25 angeschlossene Lampe in einfacher Weise an- bzw. ausgeschaltet werden. Ebenso können über das Bus-Kabel z. B. Rollläden angesteuert werden. Zudem können verschiedene Zustandsdaten der Bauelemente 24 und vorzugsweise der daran angeschlossenen Bauteile, z. B. Rollläden und/oder Fußbodenheizungen und/oder Lampen, ausgelesen werden.

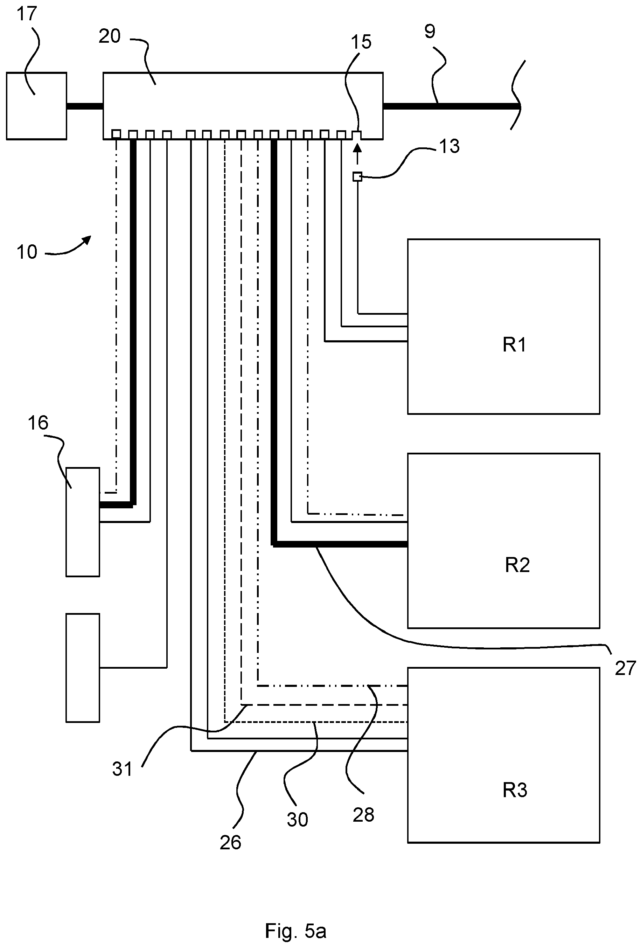

Fig. 5a zeigt eine erste Ausgestaltung des Kabelbaums 10 in schematischer Ansicht. Die Kabel 26, 27, 28, 30, 31 verlaufen hierbei zu den verschiedenen Räumen R1, R2, R3 und werden dort mit den Bauelementen 24 verbunden (in der Fig. 5a nicht dargestellt). Hierbei kann eine unterschiedliche Anzahl von Kabeln 26, 27, 28, 30, 31 und unterschiedliche Kabeltypen zu den einzelnen Räumen R1, R2, R3 verlaufen. Die Anzahl der Kabel 26, 27, 28, 30, 31 ist jedoch so dimensioniert, dass die Bauelemente 24 in den einzelnen Räumen R1, R2, R3 mit den entsprechenden Kabeln 26, 27, 28, 30, 31 versorgt werden können.

Die Kabel 26, 27, 28, 30, 31 werden vorzugsweise über eine Steckverbindung mit dem Hauptverteilerkasten 20 verbunden. Hierfür umfassen die Kabel 26, 27, 28, 30, 31 Steckverbinder 13, welche sich mit Steckverbindern 15 des Hauptverteilerkastens 20 verbinden lassen. Dies gewährleistet eine sicher und fehlerfreie Verbindung zwischen den Kabeln 26, 27, 28, 30, 31 und dem Hauptverteilerkasten 20.

Zudem ist der Hauptverteilerkasten 20 mit einer Stromversorgung 17, z. B. einer Batterie oder einem Akkumulator, verbunden. Hierdurch kann der Kabelbaum 10 auch dann mit Strom versorgt werden, falls noch kein Hausanschluss 9 vorhanden sein sollte. Zudem kann das Gebäudemodul 1 mit Strom versorgt werden, falls ein Stromausfall vorliegen sollte.

Des Weiteren umfasst der Kabelbaum 10 zwei Kabelbaumverbinder 16. Die Kabelbaumverbinder 16 eignen sich dazu, den Kabelbaum 10 mit einem weiteren (in der Fig. 5a nicht dargestellten) Kabelbaum 10a eines weiteren (nicht in der Fig. 5a dargestellten) Gebäudemoduls 101 zu verbinden, wie unten näher erläutert wird. Die Kabelbaumverbinder 16 sind jeweils über mindestens ein Kabel 26, 27, 28, 30, 31 mit dem Hauptverteilerkasten 20 verbunden. Bei dem Kabelbaumverbinder 16 handelt es sich um einen Steckverbinder.

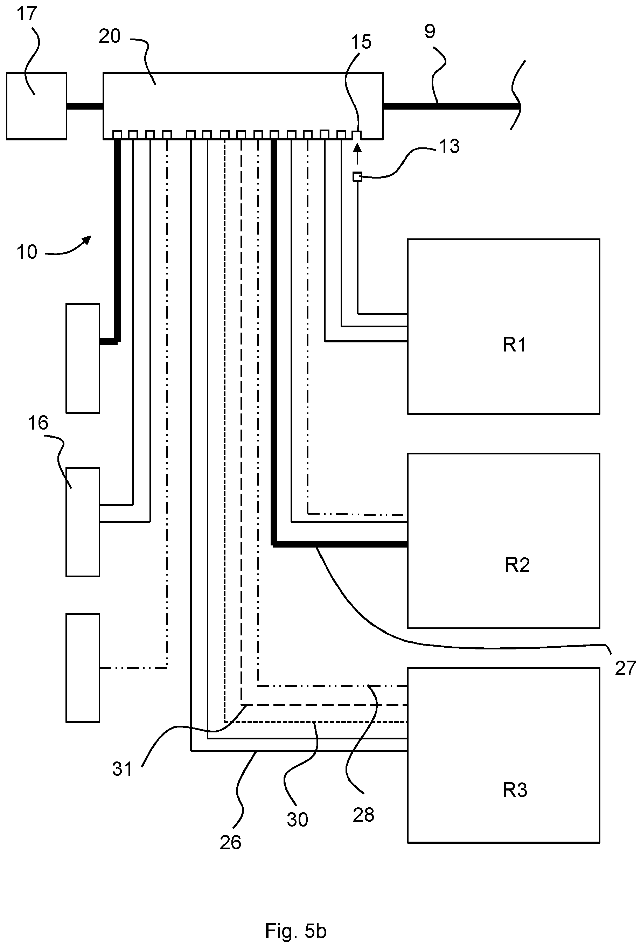

Fig. 5b zeigt eine zweite Ausgestaltung des Kabelbaums 10. Hierbei sind die gleichen Komponenten vorgesehen, wie in der ersten Ausgestaltung. Allerdings ist in der zweiten Ausgestaltung jeweils ein Kabelbaumverbinder 16 für jeden Kabeltyp vorgesehen.

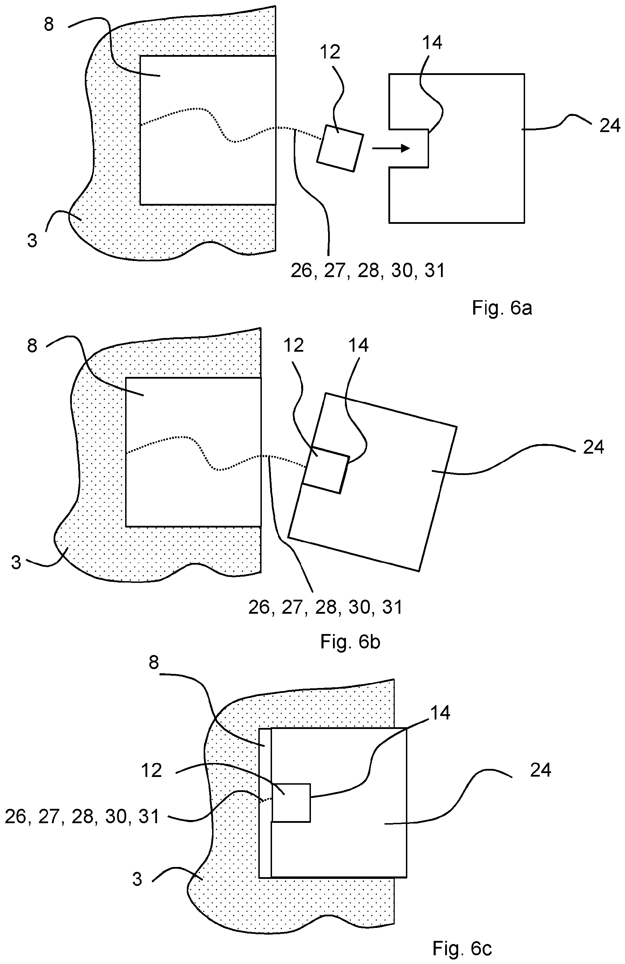

Die Figuren 6a - c zeigen eine Steckverbindung zwischen einem Kabel 26, 27, 28, 30, 31 und einem Bauelement 24. Ein Steckverbinder 12 des Kabels 26, 27, 28, 30, 31 wird in einen Steckverbinder 14 des Bauelementes 24 gesteckt, vgl. Figuren 6a und 6b. Hierdurch wird das Bauelement 24 mit dem Kabel 26, 27, 28, 30, 31 verbunden. So kann beispielsweise eine elektrische Verbindung oder eine Datenverbindung zwischen dem Bauelement 24 und dem Kabel 26, 27, 28, 30, 31 hergestellt werden. Im Anschluss daran wird das Bauelement 24 in der Bauelement-Montageposition 8 des Wandelementes 3 installiert, vgl. Fig. 6c.

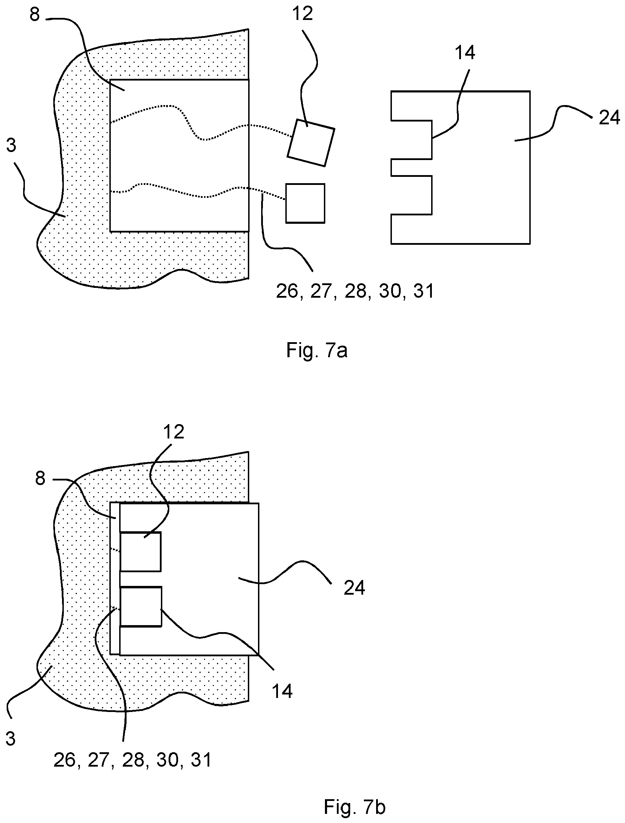

Figuren 7a und 7b zeigen eine Steckverbindung zwischen einem Bauelement 24 und zwei Kabeln 26, 27, 28, 30, 31. Hierbei umfasst jedes Kabel 26, 27, 28, 30, 31 einen Steckverbinder 12, welche jeweils mit einem der beiden Steckverbindern 14 des Bauelementes 24 verbunden werden. Das Bauelement 24 wird im Anschluss daran in der Bauelement-Montageposition 8 installiert. Hierdurch können die Kabel 26, 27, 28, 30, 31 und die Bauelemente 24 in einfacher Weise miteinander verbunden werden. Hierdurch können Daten bzw. kann Strom von einem Kabel 26, 27, 28, 30, 31 über das Bauelement 24 an das andere Kabel 26, 27, 28, 30, 31 weitergeleitet werden.

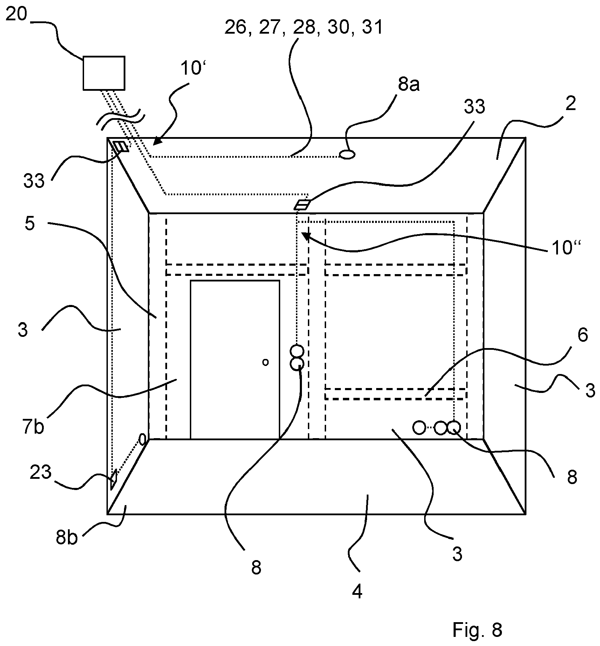

Fig. 8 zeigt eine schematische Darstellung eines Innenraums des Gebäudemoduls 1 mit einem Kabelbaum 10' und zwei Kabelbäumen 10". Der Kabelbaum 10' ist am Deckenelement 2 angeordnet. In zwei Wandelementen 3 ist jeweils ein Kabelbaum 10" vorgesehen.

Die Kabel 26, 27, 28, 30, 31 des Kabelbaums 10' verlaufen ausgehend von dem Hauptverteilerkasten 20 zu einer Bauelement-Montageposition 8 und zu Kabelbaumverbindern 33. Mit diesen Kabelbaumverbindern 33 wird der Kabelbaum 10' mit den jeweiligen Kabelbäumen 10" verbunden. Alternativ können auch mehrere Kabelbaumverbinder 33 vorgesehen sein, um beispielsweise jeden Kabeltyp der Kabelbäume 10' und 10" mit einem eigenen Kabelbaumverbinder 33 zu verbinden. Bei den Kabelbaumverbindern 33 kann es sich um Steckverbinder handeln. Ausgehend von dem Kabelbaumverbinder 33 verlaufen die Kabel 26, 27, 28, 30, 31 des Kabelbaums 10" zu den verschiedenen Bauelement-Montagepositionen 8. Dort können die Kabel 26, 27, 28, 30, 31 mit verschiedenen Bauelementen 24 verbunden werden.

Die Verwendung von mehreren Kabelbäumen 10' und 10" ist insbesondere bei der Montage von den äußeren Wandelementen 3 vorteilhaft. Diese werden, wie oben beschrieben, vorab fertig aufgebaut. In die äußeren Wandelemente 3 kann somit schon bei deren Montage ein Kabelbaum 10" eingebaut werden, sodass alle Kabel 26, 27, 28, 30, 31 bereits vollständig installiert sind, wenn das äußere Wandelement 3 am Gebäudemodul 1 bzw. an weiteren Wandelementen montiert wird. Der Kabelbaum 10" muss nach der Montage des äußeren Wandelementes 3 noch über den Kabelbaumverbinder 10' mit dem Hauptverteilerkasten 20 verbunden werden.

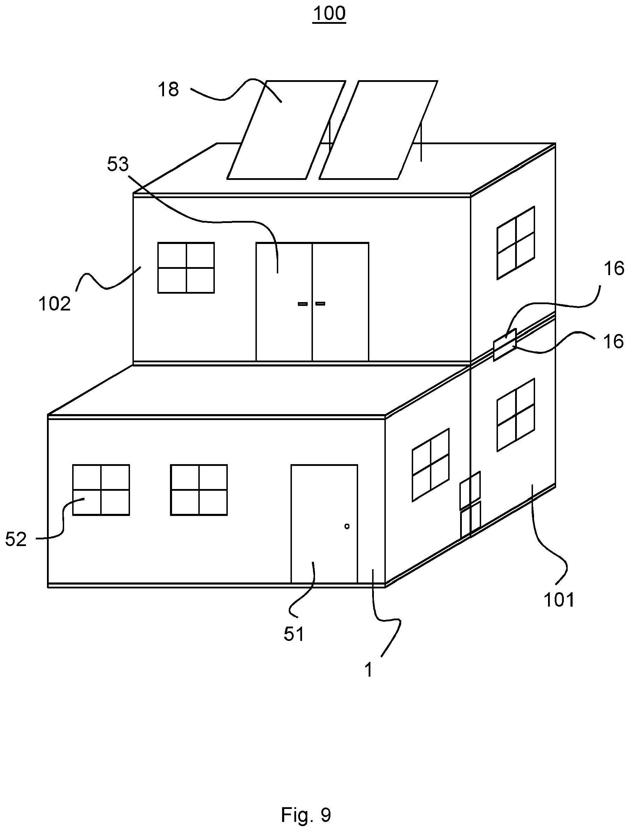

Fig. 9 zeigt ein Beispiel eines erfindungsgemäßen Modulhaus 100. Das Modulhaus 100 umfasst das Gebäudemodul 1, ein Gebäudemodul 101 und ein auf dem Gebäudemodul 101 angeordnetes Gebäudemodul 102. Hierbei sind die Gebäudemodule 101, 102 im Wesentlichen so aufgebaut wie das Gebäudemodul 1. Die Gebäudemodule 101, 102 umfassen hierbei jeweils einen Kabelbaum 10a. Am Modulhaus 100 sind mehrere Kabelbaumverbinder 16 vorgesehen, um die Kabelbäume 10, 10a der Gebäudemodule 1, 101, 102 miteinander zu verbinden. Zudem umfasst das Modulhaus 100 mehrere Fenster 52, eine Tür 51 und eine Balkontür 53. Des Weiteren ist auf dem Dach des Modulhauses 100 die Photovoltaikanlage 18 angebracht.

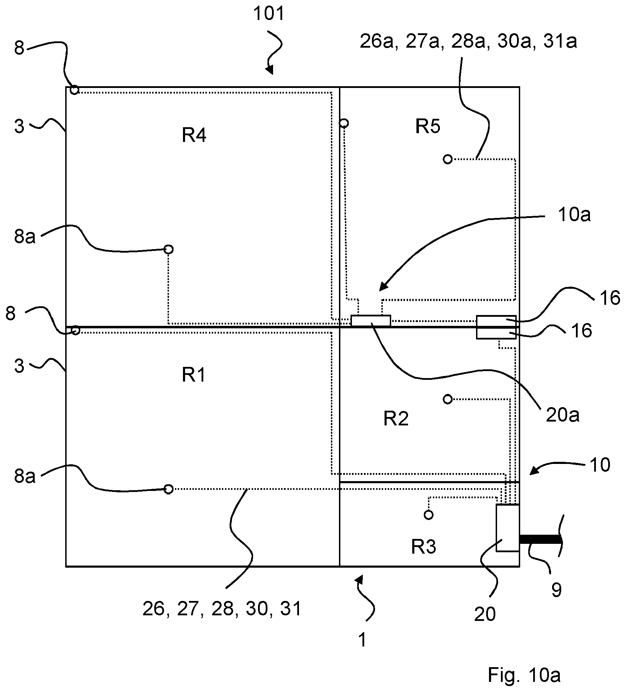

Fig. 10a zeigt die Gebäudemodule 1 und 101 in Draufsicht. Das Gebäudemodul 1 umfasst die Räume R1, R2, R3 und den Kabelbaum 10. Das Gebäudemodul 101 umfasst Räume R4 und R5 und den Kabelbaum 10a. Der Kabelbaum 10a des Gebäudemoduls 101 ist im Wesentlichen so aufgebaut, wie der Kabelbaum 10 des Gebäudemoduls 1. Kabel 26a, 27a, 28a, 30a, 31a des Kabelbaums 10a sind ebenfalls zumindest teilweise gebündelt und zumindest teilweise parallel zueinander verlaufend angeordnet. Der Kabelbaum 10a umfasst zudem den Kabelbaumverbinder 16, welcher über ein Kabel 26a, 27a, 28a, 30a, 31a mit dem Hauptverteilerkasten 20a verbunden ist. Hierdurch werden die Kabel 26a, 27a, 28a, 30a, 31a des Kabelbaums 10a des Gebäudemoduls 101 mit den Kabeln 26, 27, 28, 30, 31 des Kabelbaums 10 des Gebäudemoduls 1 verbunden. Vom Hauptverteilerkasten 20a aus verlaufen die Kabel 26a, 27a, 28a, 30a, 31a zu den Bauelement-Montagepositionen 8, 8a des Gebäudemoduls 101.

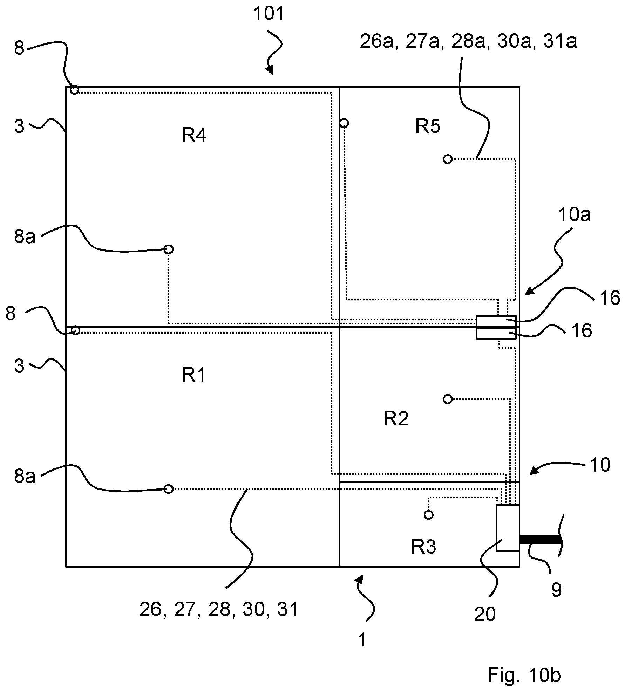

Fig. 10b zeigt eine zweite Ausgestaltung des Kabelbaums 10a. Hierbei umfasst das Gebäudemodul 101 keinen Hauptverteilerkasten 20a. Vielmehr verlaufen die Kabel 26a, 27a, 28a, 30a, 31a des Kabelbaums 10a ausgehend von dem Kabelbaumverbinder 16 zu den jeweiligen Bauelement-Montagepositionen 8, 8a.

Es wird ausdrücklich darauf hingewiesen, dass auch die Kombination von Einzelmerkmalen sowie Untermarkmalen als erfindungswesentlich und vom Offenbarungsgehalt der Anmeldung umfasst anzusehen sind.

### BEZUGSZEICHENLISTE

- 1: Gebäudemodul
- 2: Deckenelement
- 3: Wandelement
- 4: Bodenelement
- 5: Ständer
- 6: Riegel
- 7a: Außenverschalung
- 7b: Innenverschalung
- 8: Bauelement-Montageposition
- 8a: Bauelement-Montageposition
- 8b: Bauelement-Montageposition
- 9: Hausanschluss
- 10: Kabelbaum
- 10': Kabelbaum
- 10": kabelbaum
- 10a: Kabelbaum
- 12: Steckverbinder
- 13: Steckverbinder
- 14: Steckverbinder
- 15: Steckverbinder
- 16: Kabelbaumverbinder
- 17: Stromversorgung
- 18: Photovoltaikanlage
- 20: Hauptverteilerkasten
- 20a: Hauptverteilerkasten
- 21: Steckdose
- 22: Schalter
- 23: Abzweigdose
- 24: Bauelement

- 25: Klemme
- 26: Kabel
- 26a: Kabel
- 27: Starkstromkabel
- 27a: Starkstromkabel
- 28: Datenübertragungskabel
- 28a: Datenübertragungskabel
- 29: Anschlussdose
- 30: Netzwerkkabel
- 30a: Netzwerkkabel
- 31: steuerndes Kabel
- 31a: steuerndes Kabel
- 32: Leerrohr
- 33: Kabelbaumverbinder

- 51: Tür
- 52: Fenster
- 53: Balkontür

- 81: Bauelement-Montageposition
- 82: Bauelement-Montageposition
- 83: Bauelement-Montageposition

- 100: Modulhaus
- 101: Gebäudemodul
- 102: Gebäudemodul

- R1: Raum
- R2: Raum
- R3: Raum
- R4: Raum
- R5: Raum

## Patentansprüche

1. Gebäudemodul (1) für ein Modulhaus (100) umfassend
mindestens ein Deckenelement (2),
mindestens ein Bodenelement (4),
mindestens ein Wandelement (3),
wobei im Deckenelement (2) und/oder im Bodenelement (4) und/oder im Wandelement (3) mindestens eine, vorzugsweise vordefinierte, Bauelement-Montageposition (8, 8a, 8b) zur Installation von Bauelementen (24) vorgesehen ist,
einen Hauptverteilerkasten (20), sowie
mindestens einen vorkonfektionierten Kabelbaum (10, 10', 10"), welcher mindestens zwei, vorzugsweise mehrere auf bestimmte Längen zugeschnittene Kabel (26, 27, 28, 30, 31) umfasst,
wobei die Kabel (26, 27, 28, 30, 31) vom Hauptverteilerkasten (20) zu den Bauelement-Montagepositionen (8) verlaufen, und
wobei der mindestens eine vorkonfektionierte Kabelbaum (10, 10', 10") stromführende Kabel (26) umfasst,
**dadurch gekennzeichnet, dass**
die Kabel (26, 27, 28, 30, 31) des mindestens einen vorkonfektionierten Kabelbaums (10, 10', 10") zumindest teilweise gebündelt und zumindest teilweise parallel zueinander verlaufend angeordnet sind.

2. Gebäudemodul (1) nach Anspruch 1, **dadurch gekennzeichnet, dass** der mindestens eine vorkonfektionierte Kabelbaum (10, 10', 10") zusätzlich mindestens ein Starkstromkabel (27) und/oder mindestens ein Netzwerkkabel (30) und/oder mindestens ein steuerndes Kabel (31) und/oder mindestens ein Datenübertragungskabel (28) umfasst.

3. Gebäudemodul (1) nach Anspruch 2, **dadurch gekennzeichnet, dass** das Datenübertragungskabel (28) ein Bus-Kabel ist.

4. Gebäudemodul (1) nach einem der vorhergehenden Ansprüche, **dadurch gekennzeichnet, dass** die Kabel (26, 27, 28, 30, 31) mit dem Hauptverteilerkasten (20) und/oder mit den Bauelementen (24) über Steckverbinder (12, 14 und/oder 13, 15) verbindbar sind.

5. Gebäudemodul (1) nach einem der vorhergehenden Ansprüche, **dadurch gekennzeichnet, dass** als Bauelement (24) eine Steckdose (21) oder ein Schalter (22) oder eine Verteilerdose (23) oder eine Klemme (25) oder eine Anschlussdose (29) vorgesehen ist.

6. Gebäudemodul (1) nach einem der vorhergehenden Ansprüche, **dadurch gekennzeichnet, dass** mindestens ein Kabel (26, 27, 28, 30, 31) zu mehreren Bauelement-Montagepositionen (8) verläuft.

7. Gebäudemodul (1) nach einem der vorhergehenden Ansprüche, **dadurch gekennzeichnet, dass** mindestens ein Kabelbaumverbinder (16) vorgesehen ist, mittels dem der mindestens eine Kabelbaum (10, 10', 10") des Gebäudemoduls (1) mit einem Kabelbaum (10a) eines weiteren Gebäudemoduls (101) verbindbar ist.

8. Gebäudemodul (1) nach Anspruch 7, **dadurch gekennzeichnet, dass** es sich bei dem Kabelbaumverbinder (16) um einen Steckverbinder handelt.

9. Gebäudemodul (1) nach einem der vorhergehenden Ansprüche, **dadurch gekennzeichnet, dass** mehrere vorkonfektionierte Kabelbäume (10', 10") vorgesehen sind.

10. Gebäudemodul (1) nach einem der vorhergehenden Ansprüche, **dadurch gekennzeichnet, dass** in mindestens einem Wandelement (3) ein vorkonfektionierter Kabelbaum (10") vorgesehen ist.

11. Gebäudemodul (1) nach einem der vorhergehenden Ansprüche, **dadurch gekennzeichnet, dass** mindestens ein Kabelbaumverbinder (33) vorgesehen ist, mittels welchem die Kabelbäume (10', 10") miteinander verbindbar ist.

12. Gebäudemodul (1) nach Anspruch 11, **dadurch gekennzeichnet, dass** es sich bei dem Kabelbaumverbinder (33) um einen Steckverbinder handelt.

13. Gebäudemodul (1) nach einem der vorhergehenden Ansprüche, **dadurch gekennzeichnet, dass** das Gebäudemodul (1) oder zumindest ein Wandelement (3) in Ständerbauweise errichtet ist.

14. Gebäudemodul (1) nach Anspruch 13, **dadurch gekennzeichnet, dass** das Wandelement (3) mindestens einen, vorzugsweise mehrere vertikal verlaufende, vorzugsweise beabstandet zueinander angeordnete Ständer (5) und/oder mindestens einen, vorzugsweise mehrere horizontal verlaufende, vorzugsweise beabstandet zueinander angeordnete Riegel (6) umfasst.

15. Gebäudemodul (1) nach einem der vorhergehenden Ansprüche, **dadurch gekennzeichnet, dass** mindestens ein Leerrohr (32) zur Aufnahme von mindestens einem Kabel (26, 27, 28, 30, 31) vorgesehen ist, welches in einem Wandelement (3) und/oder in einem Deckenelement (2) und/oder in einem Bodenelement (4) angeordnet ist

16. Gebäudemodul (1) nach einem der vorhergehenden Ansprüche, **dadurch gekennzeichnet, dass** das Wandelement (3) eine Außenverschalung (7a) und/oder eine Innenverschalung (7b) aufweist, wobei es sich insbesondere um eine Gipskartonverschalung oder eine Grobspanplatten (OSB)-Verschalung oder eine Holzverschalung handelt.

17. Gebäudemodul (1) nach einem der vorhergehenden Ansprüche, **dadurch gekennzeichnet, dass** das Gebäudemodul (1) mehrere Räume (R1, R2, R3) umfasst.

18. Gebäudemodul (1) nach einem der vorhergehenden Ansprüche, **dadurch gekennzeichnet, dass** das Gebäudemodul (1) werkseitig vorgefertigt transportierbar ist.

19. Gebäudemodul (1) nach einem der vorhergehenden Ansprüche, **dadurch gekennzeichnet, dass** das Gebäudemodul (1) eine Gebäudemodul-autarke Stromversorgung (17), z. B. eine Batterie oder einen Akkumulator, und/oder eine Photovoltaikanlage (18) umfasst.

20. Modulhaus (100) umfassend mehrere Gebäudemodule (1, 101, 102), **dadurch gekennzeichnet, dass** das Modulhaus (100) mindestens ein Gebäudemodul (1) nach einem der vorhergehenden Ansprüche umfasst.

## Geänderte Patentansprüche

### Geänderte Patentansprüche gemäss Regel 137(2) EPÜ.

1. Gebäudemodul (1) für ein Modulnaus (100), wobei das Gebäudemodul (1) folgendes umfasst:
mindestens ein Deckenelement (2),
mindestens ein Bodenelement (4),
mindestens ein Wandelement (3),
wobei im Deckenelement (2) und/oder im Bodenelement (4) und/oder im Wandelement (3) mindestens eine, vorzugsweise vordefinierte, Bauelement-Montageposition (8, 8a, 8b) zur Installation von Bauelementen (24) vorgesehen ist,
einen Hauptverteilerkasten (20), sowie
mindestens einen vorkonfektionierten Kabelbaum (10, 10', 10"), welcher mindestens zwei, vorzugsweise mehrere auf bestimmte Längen zugeschnittene Kabel (26, 27, 28, 30, 31) umfasst,
wobei die Kabel (26, 27, 28, 30, 31) vom Hauptverteilerkasten (20) zu den Bauelement-Montagepositionen (8) verlaufen,
wobei die Kabel (26, 27, 28, 30, 31) des vorkonfektionierten Kabelbaums (10, 10', 10") jeweils auf die Länge der Verbindung zwischen der für die jeweiligen Kabel (26, 27, 28, 30, 31) vorgesehenen Bauelement-Montagepositionen (8, 8a, 8b) mit dem Hauptverteilerkasten (20) zugeschnitten sind,
wobei der mindestens eine vorkonfektionierte Kabelbaum (10, 10', 10") stromführende Kabel (26) umfasst,
die Kabel (26, 27, 28, 30, 31) des mindestens einen vorkonfektionierten Kabelbaums (10, 10', 10") zumindest teilweise gebündelt und zumindest teilweise parallel zueinander verlaufend angeordnet sind.

2. Gebäudemodul (1) nach Anspruch 1, **dadurch gekennzeichnet, dass** der mindestens eine vorkonfektionierte Kabelbaum (10, 10', 10") zusätzlich mindestens ein Starkstromkabel (27) und/oder mindestens ein Netzwerkkabel (30) und/oder mindestens ein steuerndes Kabel (31) und/oder mindestens ein Datenübertragungskabel (28) umfasst.

3. Gebäudemodul (1) nach Anspruch 2, **dadurch gekennzeichnet, dass** das Datenübertragungskabel (28) ein Bus-Kabel ist.

4. Gebäudemodul (1) nach einem der vorhergehenden Ansprüche, **dadurch gekennzeichnet, dass** die Kabel (26, 27, 28, 30, 31) mit dem Hauptverteilerkasten (20) und/oder mit den Bauelementen (24) über Steckverbinder (12, 14 und/oder 13, 15) verbindbar sind.

5. Gebäudemodul (1) nach einem der vorhergehenden Ansprüche, **dadurch gekennzeichnet, dass** als Bauelement (24) eine Steckdose (21) oder ein Schalter (22) oder eine Verteilerdose (23) oder eine Klemme (25) oder eine Anschlussdose (29) vorgesehen ist.

6. Gebäudemodul (1) nach einem der vorhergehenden Ansprüche, **dadurch gekennzeichnet, dass** mindestens ein Kabel (26, 27, 28, 30, 31) zu mehreren Bauelement-Montagepositionen (8) verläuft.

7. Gebäudemodul (1) nach einem der vorhergehenden Ansprüche, **dadurch gekennzeichnet, dass** mindestens ein Kabelbaumverbinder (16) vorgesehen ist, mittels dem der mindestens eine Kabelbaum (10, 10', 10") des Gebäudemoduls (1) mit einem Kabelbaum (10a) eines weiteren Gebäudemoduls (101) verbindbar ist.

8. Gebäudemodul (1) nach Anspruch 7, **dadurch gekennzeichnet, dass** es sich bei dem Kabelbaumverbinder (16) um einen Steckverbinder handelt.

9. Gebäudemodul (1) nach einem der vorhergehenden Ansprüche, **dadurch gekennzeichnet, dass** mehrere vorkonfektionierte Kabelbäume (10', 10") vorgesehen sind.

10. Gebäudemodul (1) nach einem der vorhergehenden Ansprüche, **dadurch gekennzeichnet, dass** in mindestens einem Wandelement (3) ein vorkonfektionierter Kabelbaum (10") vorgesehen ist.

11. Gebäudemodul (1) nach einem der vorhergehenden Ansprüche, **dadurch gekennzeichnet, dass** mindestens ein Kabelbaumverbinder (33) vorgesehen ist, mittels welchem die Kabelbäume (10', 10") miteinander verbindbar ist.

12. Gebäudemodul (1) nach Anspruch 11, **dadurch gekennzeichnet, dass** es sich bei dem Kabelbaumverbinder (33) um einen Steckverbinder handelt.

13. Gebäudemodul (1) nach einem der vorhergehenden Ansprüche, **dadurch gekennzeichnet, dass** das Gebäudemodul (1) oder zumindest ein Wandelement (3) in Ständerbauweise errichtet ist.

14. Gebäudemodul (1) nach Anspruch 13, **dadurch gekennzeichnet, dass** das Wandelement (3) mindestens einen, vorzugsweise mehrere vertikal verlaufende, vorzugsweise beabstandet zueinander angeordnete Ständer (5) und/oder mindestens einen, vorzugsweise mehrere horizontal verlaufende, vorzugsweise beabstandet zueinander angeordnete Riegel (6) umfasst.

15. Gebäudemodul (1) nach einem der vorhergehenden Ansprüche, **dadurch gekennzeichnet, dass** mindestens ein Leerrohr (32) zur Aufnahme von mindestens einem Kabel (26, 27, 28, 30, 31) vorgesehen ist, welches in einem Wandelement (3) und/oder in einem Deckenelement (2) und/oder in einem Bodenelement (4) angeordnet ist

16. Gebäudemodul (1) nach einem der vorhergehenden Ansprüche, **dadurch gekennzeichnet, dass** das Wandelement (3) eine Außenverschalung (7a) und/oder eine Innenverschalung (7b) aufweist, wobei es sich insbesondere um eine Gipskartonverschalung oder eine Grobspanplatten (OSB)-Verschalung oder eine Holzverschalung handelt.

17. Gebäudemodul (1) nach einem der vorhergehenden Ansprüche, **dadurch gekennzeichnet, dass** das Gebäudemodul (1) mehrere Räume (R1, R2, R3) umfasst.

18. Gebäudemodul (1) nach einem der vorhergehenden Ansprüche, **dadurch gekennzeichnet, dass** das Gebäudemodul (1) werkseitig vorgefertigt transportierbar ist.

19. Gebäudemodul (1) nach einem der vorhergehenden Ansprüche, **dadurch gekennzeichnet, dass** das Gebäudemodul (1) eine Gebäudemodul-autarke Stromversorgung (17), z. B. eine Batterie oder einen Akkumulator, und/oder eine Photovoltaikanlage (18) umfasst.

20. Modulhaus (100) umfassend mehrere Gebäudemodule (1, 101, 102), **dadurch gekennzeichnet, dass** das Modulhaus (100) mindestens ein Gebäudemodul (1) nach einem der vorhergehenden Ansprüche umfasst.
